# FASCICULE DE BREVET EUROPEEN

(11) **EP 1 285 360 B1**
(45) Date de publication et mention de la délivrance du brevet: **25.02.2004**
(21) Numéro de dépôt: 01936547.7
(22) Date de dépôt: 16.05.2001
(51) Int. Cl.: G06F 17/30

(54) **MODULE DE CREATION D'OBJETS, A PARTIR DE DONNEES BRUTES EXTRAITES D'AU MOINS UNE SOURCE DE DONNEES CONTENANT AU MOINS UN DOCUMENT EXPRIME SELON UN LANGAGE DE TYPE "MARKUP"**
HERSTELLUNGSMODUL VON OBJEKTEN, DIE AUS EINER QUELLE VON DATEN, AUSGEDRÜCKT DURCH EINE SPRACHE VON TYP "MARKUP", ENTNOMMEN SIND
MODULE FOR GENERATING OBJECTS, FROM RAW DATA RETRIEVED FROM AT LEAST A DATA SOURCE CONTAINING AT LEAST A DOCUMENT WRITTEN IN A MARKUP LANGUAGE

(30) Priorité: 31.05.2000 FR 0007074
(43) Date de publication de la demande: 26.02.2003
(73) Titulaire: Wokup!SA, 35000 Rennes (FR)
(72) Inventeur: ZISERMAN, François, F-35580 Guichen (FR)
(74) Mandataire: Vidon, Patrice
(86) Numéro de dépôt international: PCT/FR2001/001499
(87) Numéro de publication internationale: WO 2001/093093

(56) Documents cités:
- WOOD L: "Programming the Web: the W3C DOM specification" IEEE INTERNET COMPUTING, JAN.-FEB. 1999, IEEE, USA, vol. 3, no. 1, pages 48-54, XP002163911 ISSN: 1089-7801
- ANONYMOUS: "Converting HTML to Well Formed XML With Preference Based Tag Expansion" RESEARCH DISCLOSURE, vol. 42, no. 423, 1 juillet 1999 (1999-07-01), XP002163912 Havant, UK, article No. 423111
- LIM S -J ET AL: "WebView: a tool for retrieving internal structures and extracting information from HTML documents" PROCEEDINGS. 6TH INTERNATIONAL CONFERENCE ON ADVANCED SYSTEMS FOR ADVANCED APPLICATIONS, PROCEEDINGS. 6TH INTERNATIONAL CONFERENCE ON DATABASE SYSTEMS FOR ADVANCED APPLICATIONS, HSINCHU, TAIWAN, 19-21 APRIL 1999, pages 71-80, XP002163974 1999, Los Alamitos, CA, USA, IEEE Comput. Soc, USA ISBN: 0-7695-0084-6
- H K W ET AL: "Object model for hypermedia applications" COMPUTER COMMUNICATIONS,NL,ELSEVIER SCIENCE PUBLISHERS BV, AMSTERDAM, vol. 18, no. 7, 1 juillet 1995 (1995-07-01), pages 475-485, XP004032466 ISSN: 0140-3664
- FREYTAG C ET AL: "Resource adaptive WWW access for mobile applications" COMPUTERS AND GRAPHICS,GB,PERGAMON PRESS LTD. OXFORD, vol. 23, no. 6, décembre 1999 (1999-12), pages 841-848, XP004187832 ISSN: 0097-8493

## Description

Le domaine de l'invention est celui des réseaux de type internet, tel que, par exemple, le réseau mondial Internet. Plus précisément, l'invention concerne un module de création d'objets, à partir de données brutes extraites d'une ou plusieurs sources de données, contenant des documents exprimés selon un langage de type "markup". De tels documents peuvent être, par exemple, des fichiers de type XML (en anglais "Extended Markup Language") ou des sites Web. Par site Web, on entend ici, et dans toute la suite du document, un site du réseau mondial Internet ou un site de tout autre réseau de type internet.

Par souci de simplification, on décrit, dans toute la suite du document, un module de création d'objets à partir de données extraites de sites Web du réseau mondial Internet. Bien entendu, l'invention s'applique également à la création d'objets à partir de données extraites de sites Web de tout autre réseau de type internet, ainsi qu'à la création d'objets à partir de données extraites de toute source de données, du type contenant des documents exprimés selon un langage de type "markup".

Le réseau mondial Internet connaît aujourd'hui une progression vertigineuse : le nombre de sites Web s'accroît rapidement, qu'il s'agisse de sites d'entreprises publiques ou privées, d'organismes, d'associations ou de particuliers.

Le réseau Internet est devenu l'une des premières sources d'informations, tant la quantité de données accessibles depuis les sites Web a pris de l'ampleur, au cours des dernières années. Il devient donc impératif de savoir extraire les informations, contenues dans les différents sites Web, afin, par exemple, de les rendre accessibles aux usagers ne disposant pas d'accès au réseau mondial Internet. Bien entendu, l'invention peut être appliquée à tout autre dispositif, système, et/ou procédé nécessitant la création d'objets, à partir de données brutes extraites d'au moins un site Web, ou d'au moins une source de données contenant des documents exprimés selon un langage de type "markup".

Les premiers modules d'extraction d'informations à partir de sites Web ont vu le jour au sein de systèmes de publication multi -terminal, tels que le système "Portal - To - Go" d'Oracle (marques déposées).

Un tel système met en oeuvre un extracteur de données à partir des sites Web du réseau mondial Internet. L'extracteur effectue une recherche d'expressions régulières, à partir d'une librairie enregistrée, c'est - à - dire qu'il met en oeuvre une recherche de motifs (en anglais "patterns") au sein d'une page Web donnée, en fonction d'une grammaire prédéterminée. Par exemple, un tel extracteur peut isoler tous les mots contenant la lettre "a" au sein de la page Web analysée, ou encore tous les motifs débutant par une majuscule et se terminant par un point. Les données extraites sont ensuite exprimées à l'aide d'un langage du type XML (en anglais "Extended Markup Language").

Un inconvénient de cette technique de l'art antérieur est qu'un tel extracteur ne permet pas d'établir une arborescence des différents objets, extraits des sites Web, ni de déterminer les liens logiques unissant les différentes informations isolées par l'extracteur.

Un autre inconvénient de cette technique de l'art antérieur est qu'un tel extracteur ne met pas en oeuvre un suivi automatique d'éventuels liens entre différentes pages Web. Notamment, si, au sein d'une page Web, un tel extracteur identifie une adresse URL (en anglais "Uniform Resource Locator") renvoyant vers une autre page Web, il ne demande pas à y accéder pour en extraire les données qu'elle contient.

Un autre inconvénient de cette technique de l'art antérieur est qu'un tel extracteur ne permet pas de construire des objets structurés, à partir des informations contenues dans un ou plusieurs sites Web. Notamment, il est difficile de créer un objet composé de plusieurs membres, renseignés chacun à partir d'informations extraites d'un site Web distinct

Encore un autre inconvénient de cette technique de l'art antérieur est qu'elle ne permet pas de respecter l'arborescence de la page Web, de laquelle sont extraites les informations constitutives des objets. En effet, une telle recherche d'expressions régulières ne tient pas compte de la structure arborescente de la page analysée. On peut alors extraire de la page un motif appartenant, en partie, à une première branche, et, en partie, à une deuxième branche de la structure arborescente de la page. Ainsi, après extraction des données brutes contenues dans une page Web, on perd toute notion de navigation au sein des objets contenus dans la page analysée.

L'invention a notamment pour objectif de pallier ces inconvénients de l'art antérieur.

Plus précisément, un objectif de l'invention est de fournir un module permettant de créer des objets à partir des informations accessibles depuis une ou plusieurs sources de données contenant des documents exprimés selon un langage de type "markup". Notamment, un objectif de l'invention est de fournir un module permettant de créer des objets à partir de données contenues dans un fichier de type XML, ou un site Web par exemple.

Un autre objectif de l'invention est de mettre en oeuvre un module de création d'objets, peu coûteux à implémenter.

L'invention a encore pour objectif de fournir un module de création d'objets, peu complexe à mettre en oeuvre.

L'invention a également pour objectif de mettre en oeuvre un module de création d'objets pouvant fonctionner à partir de tout type de site Web.

Un autre objectif de l'invention est de fournir un module de création d'objets évolutif, capable de s'adapter aux changements de la ou des sources de données (site(s) Web, fichiers XML, etc.) à partir desquelles il crée des objets.

Encore un autre objectif de l'invention est de mettre en oeuvre un module de création d'objets, dans lequel les objets sont créés indépendamment de la présentation et/ou du graphisme des informations au sein de la source considérée, et dépendent uniquement des données brutes contenues dans une telle source.

L'invention a encore pour objectif de fournir un module de création d'objets, dans lequel les objets sont créés indépendamment de leur utilisation ultérieure en sortie d'un tel module de création, et/ou du type d'équipement vers lequel ils sont transmis après avoir été créés.

Encore un autre objectif de l'invention est de mettre en oeuvre un module de création d'objets, dans lesquels les objets sont organisés de manière structurée.

L'invention a également pour objectif de fournir un module de création d'objets permettant de respecter, ou non, l'arborescence du site Web, duquel sont extraites les informations constitutives des objets créés.

Ces objectifs, ainsi que d'autres qui apparaîtront par la suite sont atteints, selon l'invention, à l'aide d'un module de création d'objets, appelé module Webbike, permettant de fournir au moins une fonction de création d'objets à partir de données brutes, extraites d'au moins une source de données contenant au moins un document exprimé selon un langage de type "markup".

Selon l'invention, à la réception par ledit module de création d'objets d'une demande d'au moins un objet, ladite au moins une fonction de création d'objets met en oeuvre au moins une sous - fonction d'extraction, permettant de renseigner le contenu d'au moins un membre relatif à la structure dudit au moins un objet.

Ainsi, l'invention repose sur une approche tout à fait nouvelle et inventive de la création d'objets à partir de données brutes extraites d'une ou plusieurs sources de données, contenant des documents exprimés selon un langage de type "markup".

En effet, l'invention repose notamment sur la mise en oeuvre d'une fonction de création d'objets permettant, d'une part, de construire des objets structurés, et, d'autre part, d'extraire les informations nécessaires à une telle construction à partir d'un ou plusieurs sites Web, ou de toute autre source de données contenant au moins un document exprimé selon un langage de type "markup", en mettant en oeuvre une sous - fonction d'extraction. Ainsi, chacun des membres constitutifs de l'objet à créer est renseigné à partir de données brutes, extraites d'un ou plusieurs sites Web, ou d'un ou plusieurs fichiers XML par exemple, par la sous - fonction d'extraction. La construction d'objets structurés permet notamment, si on le souhaite, de respecter l'arborescence du ou des site(s) Web (ou de la source de données contenant des documents exprimés selon un langage de type "markup") analysés par le module de création d'objets, ou de définir un nouvel arbre, selon un critère prédéterminé, au sein duquel peuvent être organisés les objets créés.

Selon une technique avantageuse de l'invention, ladite au moins une fonction de création d'objets comprend en outre une sous-fonction de comparaison dudit au moins un objet sur lequel porte ladite demande avec une liste d'objets préalablement au moins partiellement créés, de façon à ne mettre en oeuvre ladite au moins une sous-fonction d'extraction que pour la création d'objets non préalablement créés et/ou pour compléter des objets préalablement partiellement créés.

Ainsi, si un objet a déjà été créé en réponse à une demande adressée précédemment et traitée par le module de création d'objets selon l'invention, cet objet est directement envoyé à l'équipement ayant émis une telle demande, sans mettre en oeuvre, une nouvelle fois, la fonction de création d'objets. De même, si certains des membres d'un objet ont été renseignés au cours de requêtes précédentes, la sous - fonction d'extraction ne recherche, au sein de la ou des sources de données analysée(s), que les données nécessaires pour compléter les membres non précédemment renseignés.

De manière avantageuse, chaque sous-fonction d'extraction est composée, selon un langage spécifique, d'au moins une page Webbike comprenant au moins un noeud Webbike, et ladite au moins une page Webbike est synchronisée avec au moins un document exprimé selon un langage de type "markup" d'au moins une source de données, ledit au moins un document comprenant lui-même au moins un noeud d'un langage de type "markup", ladite synchronisation permettant à un noeud Webbike de se positionner sur un noeud d'un langage de type "markup" afin d'en extraire des données brutes en vue de ladite création d'objets.

Ainsi, l'invention repose sur le concept nouveau et inventif de synchronisation sur les noeuds contenus dans un document exprimé selon un langage de type "markup", afin d'en extraire les données brutes nécessaires à la construction d'objets.

Dans toute la suite du document, un tel second langage spécifique est appelé langage Webbike : le langage Webbike permet de créer des objets (par exemple à partir d'un langage du type SIDL (en anglais "Service Interface Definition Language")) et d'initialiser la valeur de leurs attributs, à partir d'informations contenues dans une source de données d'un langage de type "markup". Ainsi, le langage Webbike permet notamment de décrire des cheminements dans un site Web, en se basant sur la présence de noeuds HTML et sur les liens existant entre les différentes pages HTML. Le langage Webbike ayant une structure relativement proche de la structure d'un langage de type "markup", certains noeuds Webbike s'apparentent aux noeuds HTML ou XML de même nom, et notamment les noeuds de type "frame", "form", ou "select" par exemple. Le langage Webbike permet de décrire un service complet Par conséquent, une page Webbike donnée peut contenir la description de plusieurs pages HTML associées, quelle que soit l'adresse du serveur qui les fournit, ou de plusieurs documents XML.

Le principe d'un tel langage Webbike est d'indiquer au module de création d'objets selon l'invention, comment rechercher de l'information dans les pages HTML, ou dans les documents XML, par exemple. Dans ce dessein, de nombreux noeuds Webbike (aussi appelés tags Webbike) permettent de se synchroniser avec la source d'un langage de type "markup" considérée. La synchronisation permet au module Webbike de se positionner sur un noeud d'un langage de type "markup", et d'en extraire des informations, telles que la valeur de ses attributs par exemple, afin de les affecter aux membres d'objets SIDL.

Avantageusement, chaque objet comprend au moins un membre relatif à la structure dudit objet et au moins un constructeur, ledit au moins un constructeur permettant audit module de création d'objets de renseigner le contenu dudit au moins un membre.

Ainsi, on peut, par exemple, imaginer qu'un objet "film" soit constitué de trois membres, à savoir un premier membre "titre du film", un second membre "résumé du film", et un troisième membre "metteur en scène". Lorsqu'il reçoit une demande de création d'objets, un tel module selon l'invention construit un objet structuré, en renseignant le contenu de chacun de ces différents membres constitutifs de l'objet.

De façon avantageuse, à la réception d'une demande relative à au moins un premier objet, ladite sous-fonction d'extraction permet en outre de renseigner le contenu d'au moins un membre d'au moins un second objet, distinct dudit au moins un premier objet, lorsque des données brutes permettant de renseigner ledit contenu sont présentes au sein dudit document avec lequel est synchronisé ladite au moins une page Webbike.

Ainsi, lorsque le module de création d'objets selon l'invention accède, par exemple, à une page Web, il crée, au moins partiellement, tous les objets susceptibles d'être créés à partir des informations contenues dans cette page Web. La sous-fonction d'extraction extrait donc toutes les données brutes permettant de renseigner le contenu des membres d'objets, y compris des objets sur lesquels la demande traitée ne porte pas.

De cette façon, le module de création d'objets selon l'invention optimise l'accès aux sources de données, en ne parcourant et analysant qu'une seule fois chacune des pages Web, ou des documents XML contenus dans les sources de données. À titre d'exemple, le module de création d'objets accède à une page Web donnée pour créer un objet "film" : il extrait alors également les données brutes contenues dans la page et permettant de renseigner au moins certains des membres des objets "metteur en scène" et "festival cinématographique".

Selon une caractéristique avantageuse de l'invention, il existe au moins les trois types de noeuds Webbike suivants :
- des noeuds Webbike de type synchronisation, permettant de rechercher un noeud d'un langage de type "markup" ou une "frame" d'un noeud d'un langage de type "markup" dans ledit au moins un document exprimé selon un langage de type "markup", afin de se positionner sur ledit noeud d'un langage de type "markup" ou sur ladite "frame" ;
- des noeuds Webbike de type structure, permettant de définir au moins une condition d'exécution desdits noeuds Webbike de type synchronisation ;
- des noeuds Webbike de type commande, permettant de mettre en oeuvre au moins une opération prédéterminée après s'être positionné sur ledit noeud d'un langage de type "markup" ou sur ladite "frame".

L'ensemble des noeuds Webbike constitue un arbre d'instructions Webbike commandant un interpréteur pour permettre de "naviguer" au sein de la source de données analysée. Une telle navigation est déclenchée par la réception, par le module de création d'objets selon l'invention, d'une demande de création d'objets.

Il existe, selon l'invention, de nombreux noeuds de type synchronisation permettant de se synchroniser sur un noeud d'un langage de type "markup" de la page ou du document analysé(e) par le module de création d'objets. On peut citer, à titre d'exemple, un noeud Webbike du type permettant de se synchroniser sur le prochain commentaire HTML, ou un noeud Webbike du type permettant de conditionner une synchronisation sur le contenu d'un noeud d'un langage de type "markup". Cette condition de synchronisation peut notamment consister à effectuer une recherche d'expressions régulières au sein du contenu dudit noeud d'un langage de type "markup". Il est à noter qu'une telle recherche d'expressions régulières est également utilisée, au sein d'une page Web, dans le système de publication multi - terminal "Portal - To - Go", mais dans un tout autre but (recherche directe de motifs dans une page, sans respect de l'arborescence de la page, et non pas synchronisation sur les noeuds HTML de cette page, dans le dessein d'extraire les données brutes contenues dans chacun des noeuds).

Selon une autre caractéristique avantageuse de l'invention, il existe en outre au moins un des types de noeuds Webbike suivants:
- des noeuds Webbike du type permettant la définition d'une sous-fonction d'extraction ; (tag Webbike)
- des noeuds Webbike du type permettant l'indication du ou des objet(s) utilisé(s) dans une sous-fonction d'extraction ; (tag implements)
- des noeuds Webbike du type permettant la définition d'une page Webbike ; (tag page)
- des noeuds Webbike du type pouvant être réutilisés avec éventuellement une liste de paramètres ; (tag method)
- des noeuds Webbike du type permettant la déclaration des paramètres d'une page ou d'un noeud réutilisable ; (tag param-list)
- des noeuds Webbike du type permettant d'appeler une autre page Webbike sans se synchroniser sur un noeud d'un langage de type "markup" ; (tag link)
- des noeuds Webbike du type permettant d'appeler un noeud de type réutilisable ; (tag call)
- des noeuds Webbike du type permettant de faire le lien vers une autre page Webbike ; (tag action)
- des noeuds Webbike du type permettant la définition d'une URL (en anglais "Uniform Resource Locator") dynamique pour une page HTML ; (tag dynamic-url)
- des noeuds Webbike du type permettant d'affecter une valeur à un paramètre ; (tag param)
- des noeuds Webbike du type permettant de répéter une séquence d'au moins un noeud Webbike ; (tag multiple)
- des noeuds Webbike du type permettant d'inclure au moins une commande dans un emplacement normalement non autorisé d'une séquence d'au moins un noeud Webbike ; (tag block)
- des noeuds Webbike du type permettant de définir au moins deux façons de se synchroniser selon le contenu d'un document ; (tag switch)
- des noeuds Webbike du type permettant d'interpréter de façon conditionnelle une séquence d'au moins un noeud Webbike. (tag if/else)

On présente, en annexe, des exemples de la syntaxe associée à certains des noeuds Webbike décrits ci-dessus.

De manière avantageuse, lesdits noeuds Webbike de type commande appartiennent au groupe comprenant :
- des noeuds Webbike du type permettant de définir un bloc d'au moins une commande associé à un noeud (tag Webbike) du type permettant la définition d'une sous-fonction d'extraction ; (tag command)
- des noeuds Webbike du type permettant l'extraction du contenu textuel d'un noeud d'un langage de type "markup" ; (tag body)
- des noeuds Webbike du type permettant l'extraction d'au moins un attribut du noeud d'un langage de type "markup" courant ; (tag attributes)
- des noeuds Webbike du type permettant de désigner une valeur constante ; (tag constant)
- des noeuds Webbike du type permettant d'assurer des fonctions de transformation des informations extraites d'un fichier exprimé selon un langage de type "markup". (function - substring, function - wordextract, function - check - url, function - java)

Avantageusement, ladite au moins une commande, d'un bloc défini par un noeud Webbike, appartient au groupe comprenant :
- les commandes de création d'objets ;
- les commandes de modification d'au moins un membre d'un objet.

Il existe ainsi, notamment, une commande de création d'un nouvel objet SIDL, une commande permettant de mettre à jour les membres d'un objet SIDL, et une commande permettant d'ajouter du texte à un membre d'objet SIDL.

Selon une technique avantageuse de l'invention, il existe au moins les deux types de page Webbike suivants :
- des pages Webbike statiques, analysées au lancement de ladite sous-fonction d'extraction ;
- des pages Webbike dynamiques, accessibles à partir d'une autre page Webbike par un noeud Webbike d'un type particulier, dit lien Webbike.

Ainsi, les pages statiques ont une URL fixe, spécifiée dans un noeud Webbike donné, appelé noeud "page", et sont analysées au lancement de l'application. II faut généralement au moins une page statique au sein d'un service. Les pages dynamiques sont atteintes à l'aide d'un lien Webbike. Une page dynamique peut définir des paramètres permettant de passer des objets de page en page. Un paramètre peut être un objet simple, comme une chaîne de caractères, ou un objet SIDL.

Selon un mode de réalisation avantageux de l'invention, il existe au moins un noeud Webbike de type synchronisation spécifique permettant de rechercher un noeud d'un langage de type "markup" prédéterminé, afin de se positionner sur ledit noeud d'un langage de type "markup" prédéterminé, et, en outre, un noeud Webbike de type synchronisation générique permettant de rechercher un noeud d'un langage de type "markup" non - prédéterminé mais spécifié en paramètre, afin de se positionner sur ledit noeud d'un langage de type "markup" non - prédéterminé.

En effet, les langages de type "markup", tels que XML, WML ou HTML sont trop riches pour pouvoir fournir un noeud de synchronisation Webbike pour chaque noeud d'un langage de type "markup" existant. Afin de ne pas surcharger inutilement le langage Webbike, il existe, selon l'invention, un noeud Webbike de type synchronisation générique, qui permet de se synchroniser sur n'importe quel noeud d'un langage de type "markup", à condition de préciser le nom de l'élément sur lequel on veut se synchroniser.

Avantageusement, au moins certains des noeuds de type synchronisation tiennent compte de conditions d'extraction portant sur des attributs et/ou sur un contenu textuel et/ou sur au moins un noeud fils d'un noeud d'un langage de type "markup" trouvé.

Si plusieurs noeuds imbriqués répondent aux critères établis dans les conditions d'extraction, le premier noeud rencontré est généralement retenu.

De façon avantageuse, ledit module Webbike met en oeuvre une fonction de gestion des cookies.

Ainsi, les cookies envoyés par un serveur HTTP lors de la récupération d'une page HTML sont stockés au niveau du module de création d'objets selon l'invention. Ils sont renvoyés automatiquement par un tel module Webbike lorsqu'il accède à des pages qui correspondent au domaine du cookie. Certains sites Web dépendant de la gestion des cookies, il est important d'identifier la ressource qui provoque l'émission du cookie, afin d'y accéder à partir du module Webbike au moment opportun.

Selon une technique avantageuse, ledit langage spécifique est construit à l'aide d'un langage du type XML.

En effet, le langage XML (en anglais "Extended Markup Language"), qui est un langage extrait du langage SGML (en anglais "Standard Generalized Markup Language"), est un langage générique particulièrement adapté à la publication et à l'échange de données.

De manière préférentielle, un tel module de création d'objets selon l'invention est mis en oeuvre au sein d'un système de publication multi - terminal, du type offrant un accès à au moins une application correspondant à un service, permettant de fournir à une pluralité de terminaux, selon au moins deux types de terminal distincts, des informations contenues dans au moins une source d'informations, ledit système comprenant :
- au moins ledit module de création d'objets ;
- un module de génération de réponse sous un format de présentation générique, en réponse à une requête formulée par un terminal et relative à une application donnée, ladite application étant définie, au sein dudit module de génération de réponse, par une pluralité de contextes et une politique de navigation parmi lesdits contextes, chaque contexte comprenant au moins une action et/ou au moins un objet, créé par ledit au moins un module de création d'objets, ladite réponse résultant d'une navigation selon ladite politique de navigation au sein de ladite pluralité de contextes ;
- un module de présentation, permettant de transformer ladite réponse sous un format de présentation générique en une réponse sous un format de présentation spécifique au type dudit terminal ayant formulé ladite requête.

En effet, l'accessibilité de terminaux de type variés aux services et aux informations disponibles sur le réseau mondial Internet, ou plus généralement à toute source de données contenant au moins un document exprimé selon un langage de type "markup", est une priorité sans cesse croissante pour les opérateurs de télécommunications.

Or, la publication de mêmes informations vers des terminaux de types différents est rendue difficile par la diversité des langages informatiques et des protocoles de communication, mis en oeuvre dans chaque type de terminal. Ainsi, par exemple, les téléphones mobiles de type WAP (en anglais "Wireless Application Protocol") utilisent le langage WML (en anglais "Wireless Markup Language"), alors que des terminaux tels que les ordinateurs personnels mettent en oeuvre un langage de type HTML.

Un tel module de création d'objets selon l'invention est donc particulièrement adapté à la réalisation d'un système de publication multi - terminal, permettant de publier des informations disponibles au sein d'une ou plusieurs sources de données contenant des documents exprimés selon un langage de type "markup" (par exemple des sites Web contenant une ou plusieurs pages Web) vers des terminaux de consultation de types différents, tels que des téléphones mobiles de type WAP, des terminaux de type PDA (en anglais "Personal Digital Assistant"), des terminaux de type Minitel, etc.

On peut également envisager qu'un tel module de création d'objets selon l'invention soit mis en oeuvre au sein d'un système de publication multi - terminal comprenant également d'autres modules de création d'objets, du type permettant, par exemple, de créer des objets à partir de données brutes contenues dans une base de données, ou dans un module java.

Un tel module de création d'objets selon l'invention est ainsi mis en oeuvre au sein d'un système de publication multi - terminal reposant sur les concepts, d'une part, de la séparation de l'information et de la présentation de l'information, et, d'autre part, de navigation, permettant de construire une structure arborescente d'objets.

Préférentiellement, ledit système de publication multi - terminal comprend en outre un module d'interfaçage permettant d'intercepter et d'analyser ladite requête formulée par un terminal, de manière à :
- identifier le type dudit terminal ;
- créer une nouvelle requête, sous un format de requête générique, destinée audit module de génération de réponse.

Ainsi, le type de terminal de consultation étant identifié, le système de publication multi - terminal mettant en oeuvre le module de création d'objets selon l'invention peut renvoyer une réponse, dont le contenu et la présentation sont parfaitement adaptés au terminal ayant émis la requête.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un exemple de réalisation d'une opération de création d'un objet, effectuée par le module de création d'objets selon l'invention ;
- la figure 2 illustre la mise en oeuvre d'une opération de création d'objets, illustrée en figure 1, au sein d'un système de publication multi - terminal comprenant un module de création d'objets selon l'invention.

Le principe général de l'invention repose sur la synchronisation sur les noeuds contenus dans un document exprimé selon un langage de type "markup", afin d'en extraire les données brutes nécessaires à la construction d'objets.

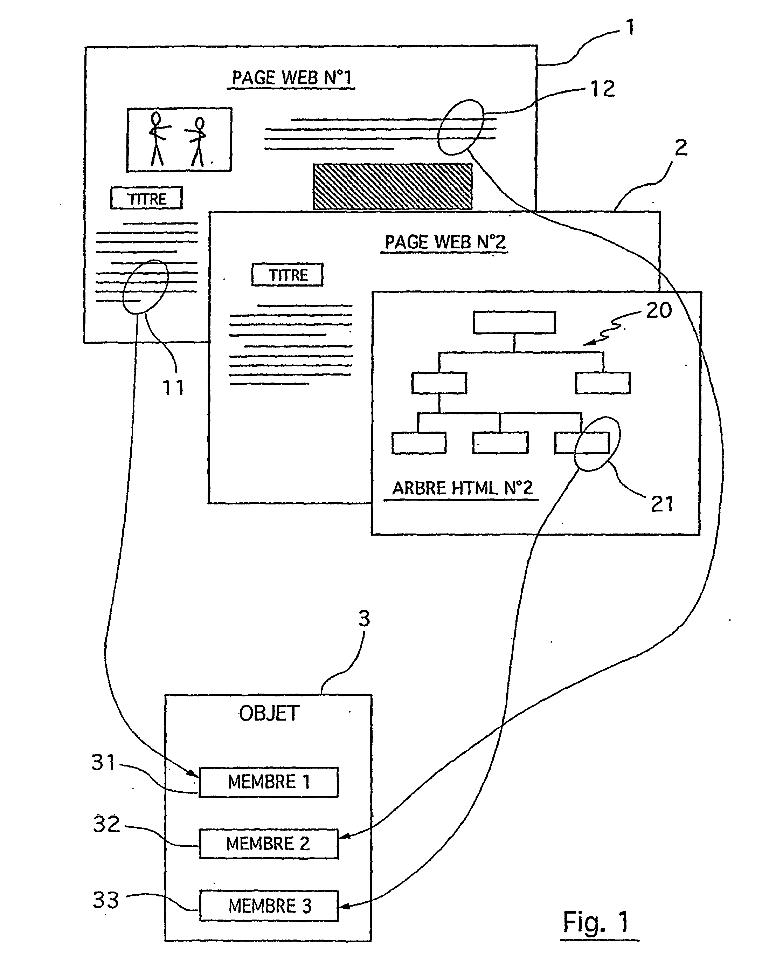

On présente, en relation avec la figure 1, un mode de réalisation d'une création d'un objet, à partir de données brutes extraites d'un ou plusieurs sites Web.

L'invention s'applique bien sûr également à la création d'objets à partir de toute autre source de données contenant au moins un document exprimé selon un langage de type "markup".

On envisage de créer un objet 3, à partir de données brutes extraites d'une première page HTML 1 d'un premier site Web, et d'une deuxième page HTML 2 d'un second site Web, qui peut être identique ou non au premier site auquel est rattachée la page référencée 1. Un tel objet 3 est, par exemple, constitué de trois membres référencés 31, 32, et 33.

Le module de création d'objets selon l'invention, qui n'a pas été représenté sur la figure 1, met en oeuvre une sous - fonction de comparaison, afin de vérifier que l'objet 3 n'a pas été précédemment créé, en tout ou en partie, au cours du traitement d'une précédente demande de création d'objets.

Si l'objet 3 n'existe pas encore, le module de création d'objets selon l'invention met en oeuvre une sous - fonction d'extraction, afin de renseigner les contenus des membres référencés 31, 32 et 33 de l'objet 3.

Le module de création d'objets se connecte alors sur le premier site Web, et demande à accéder à la page HTML référencée 1. La page HTML référencée 1 est alors parcourue par l'interpréteur à l'aide du langage Webbike. Lorsque des noeuds Webbike comportent des commandes, celles-ci sont alors exécutées.

Après analyse de la page HTML référencée 1, le module de création d'objets selon l'invention effectue une synchronisation sur les noeuds HTML contenus dans la page 1, afin d'en extraire les informations qu'ils contiennent. Ainsi, le noeud HTML associé à la zone référencée 11 de la page HTML référencée 1 contient des données brutes, permettant de renseigner le contenu du membre référencé 31 de l'objet 3. La sous - fonction d'extraction du module de création d'objets selon l'invention extrait donc les informations contenues dans la zone référencée 11 de la page 1, et les utilise pour renseigner le contenu du membre référencé 31.

Le module de création d'objets selon l'invention détermine également, par synchronisation sur le noeud HTML associé à la zone référencée 12 de la page HTML référencée 1, que les données brutes contenues dans un tel noeud HTML permettent de renseigner le contenu du membre référencé 32 de l'objet 3. La sous - fonction d'extraction extrait donc les données contenues dans le noeud HTML associé à la zone référencée 12, de manière à compléter le membre référencé 32 de l'objet 3.

Après analyse complète de la page HTML référencée 1, seuls les membres référencés 31 et 32 de l'objet 3 ont pu être complétés. Le module de création d'objets entreprend alors une synchronisation sur les noeuds HTML d'une page référencée 2, afin d'en extraire les données brutes permettant de renseigner le contenu du membre référencé 33. On peut envisager, par exemple, que le module de création d'objets selon l'invention accède à la page HTML référencée 2 par l'intermédiaire d'un lien inséré dans la page HTML référencée 1.

L'arbre 20 correspond à une représentation schématique de l'arborescence de la page HTML référencée 2. Chacun des noeuds de l'arbre 20 représente un noeud HTML sur lequel un noeud Webbike peut être synchronisé.

Ainsi, la synchronisation sur les noeuds HTML de la page référencée 2 permet d'identifier que les données brutes contenues dans le noeud HTML référencé 21 permettent de renseigner le contenu du membre référencé 33 de l'objet 3. Le module de création d'objets selon l'invention met alors en oeuvre la sous - fonction d'extraction, qui extrait les données brutes contenues dans le noeud HTML référencé 21, et renseigne le membre référencé 33 de l'objet 3.

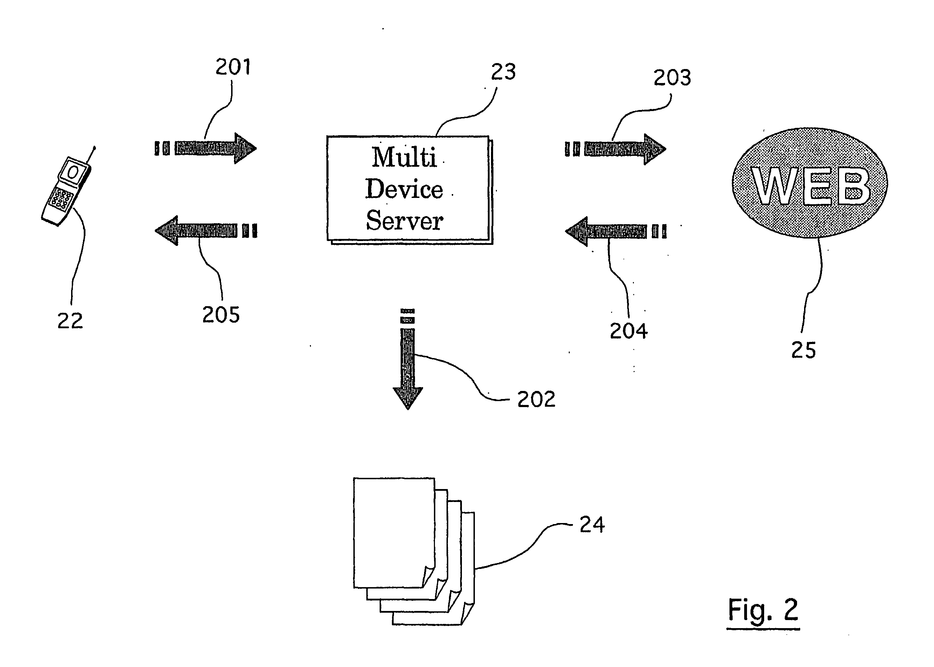

On présente désormais, en relation avec la figure 2, la création d'objets par le module de création selon l'invention, au sein d'un système de publication multi - terminal.

Un terminal de communication 22 émet une requête référencée 201 à destination du système de publication multi - terminal 23 illustré en figure 2. Un tel terminal 22 peut être un terminal de type WAP, un terminal de type PDA, un terminal de type Minitel, un ordinateur personnel, ou tout autre type de terminal pouvant émettre une requête à destination d'un tel système de publication multi - terminal 23.

La requête référencée 201 est, par exemple, une demande d'accès à une page prédéterminée d'un site Web 25 donné.

Le système de publication multi - terminal 23 analyse la requête 201 au cours d'une étape référencée 202. Notamment, le système de publication multi - terminal 23 étudie la description du service auquel le terminal 22 souhaite accéder, en utilisant un langage du type XML.

Au cours d'une étape référencée 203, le système de publication multi - terminal 23 émet alors une requête à destination du module de création d'objets selon l'invention, qui n'a pas été représenté sur la figure 2. Cette requête permet d'indiquer au module de création d'objets selon l'invention, les objets nécessaires à l'élaboration d'une réponse à destination du terminal 22, et éventuellement les constructeurs à utiliser pour renseigner le contenu du ou des membre(s) des objets à créer.

Le module de création d'objets selon l'invention met alors en oeuvre une création d'objets, de type illustrée en figure 1, à partir de la page Web que le terminal 22 souhaite consulter. Dans ce dessein, il effectue une synchronisation sur les noeuds HTML associés à cette page Web, et extrait les données brutes contenues dans de tels noeuds HTML. Il construit alors un ensemble d'objets, correspondant aux informations accessibles depuis une telle page Web, qui sont préférentiellement exprimés à l'aide d'un langage du type SIDL (en anglais "Service Interface Definition Language").

Au cours d'une étape référencée 204, le module de création d'objets selon l'invention transmet les objets créés au système de publication multi - terminal 23. Le système de publication multi - terminal 23 génère alors une réponse sous un format générique, en mettant en oeuvre une navigation au sein de contextes associés aux objets créés. Une telle réponse sous un format générique est, par exemple, un arbre du type XML. Le système de publication multi - terminal 23 effectue alors, par l'intermédiaire d'un module de présentation, non représenté sur la figure 2, une transformation de la réponse sous un format générique en une réponse sous un format spécifique au type du terminal 22 ayant émis la requête, à l'aide, par exemple, de feuilles de style caractéristiques de chaque type de terminal de consultation pouvant accéder au système de publication multi - terminal 23.

Au cours d'une étape référencée 205, le système de publication muiti - terminal 23 transmet, au terminal 22, une réponse, correspondant à la page Web à laquelle le terminal 22 souhaitait accéder, et dont le contenu et la présentation sont adaptés au type du terminal 22.

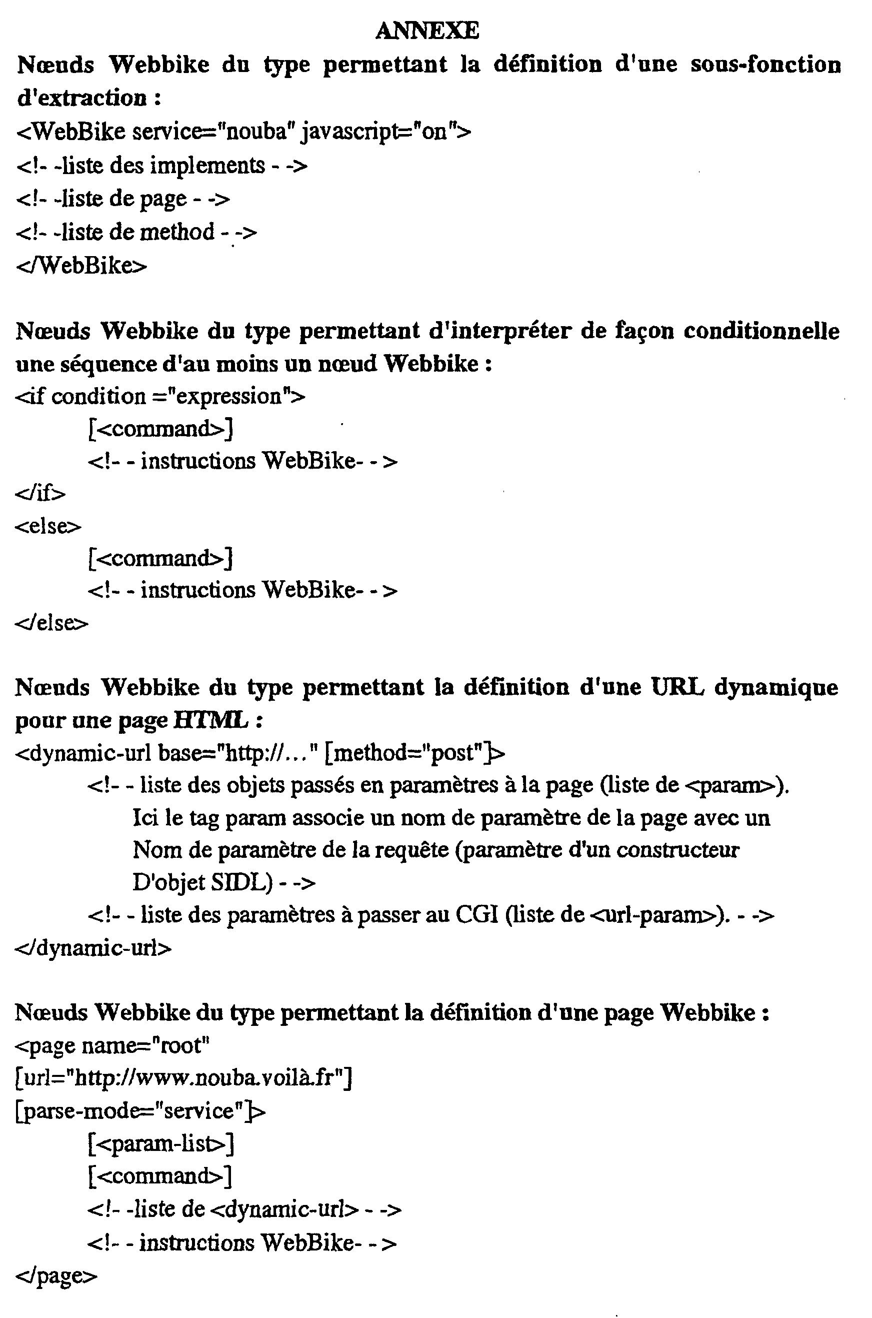

## Revendications

1. Module de création d'objets, appelé module Webbike, permettant de fournir au moins une fonction de création d'objets à partir de données brutes extraites d'au moins une source de données (25) contenant au moins un document exprimé selon un langage de type "markup",
**caractérisé en ce qu'**à la réception par ledit module de création d'objets d'une demande (201) d'au moins un objet, ladite au moins une fonction de création d'objets met en oeuvre au moins une sous-fonction d'extraction, permettant de renseigner le contenu d'au moins un membre (31, 32, 33) relatif à la structure dudit au moins un objet (3),
chaque sous-fonction d'extraction étant composée, selon un langage spécifique, d'au moins une page Webbike comprenant au moins un noeud Webbike,
et **en ce que** ladite au moins une page Webbike est synchronisée avec au moins un document (1, 2) exprimé selon un langage de type "markup" d'au moins une source de données, ledit au moins un document comprenant lui-même au moins un noeud d'un langage de type "markup", ladite synchronisation permettant à un noeud Webbike de se positionner sur un noeud (21) d'un langage de type "markup" afin d'en extraire des données brutes en vue de ladite création d'objets.

2. Module de création d'objets selon la revendication 1, **caractérisé en ce que** ladite au moins une fonction de création d'objets comprend en outre une sous-fonction de comparaison dudit au moins un objet sur lequel porte ladite demande avec une liste d'objets préalablement au moins partiellement créés, de façon à ne mettre en oeuvre ladite au moins une sous-fonction d'extraction que pour la création d'objets non préalablement créés et/ou pour compléter des objets préalablement partiellement créés.

3. Module de création d'objets selon l'une quelconque des revendications 1 et 2, **caractérisé en ce que** chaque objet comprend au moins un membre relatif à la structure dudit objet et au moins un constructeur, ledit au moins un constructeur permettant audit module de création d'objets de renseigner le contenu dudit au moins un membre.

4. Module de création d'objets selon la revendication 3, **caractérisé en ce qu'**à la réception d'une demande relative à au moins un premier objet, ladite sous-fonction d'extraction permet en outre de renseigner le contenu d'au moins un membre d'au moins un second objet, distinct dudit au moins un premier objet, lorsque des données brutes permettant de renseigner ledit contenu sont présentes au sein dudit document avec lequel est synchronisé ladite au moins une page Webbike.

5. Module de création d'objets selon l'une quelconque des revendications 1 à 4, **caractérisé en ce qu'**il existe au moins les trois types de noeuds Webbike suivants :
- des noeuds Webbike de type synchronisation, permettant de rechercher un noeud d'un langage de type "markup" ou une "frame" d'un noeud d'un langage de type "markup" dans ledit au moins un document exprimé selon un langage de type "markup", afin de se positionner sur ledit noeud d'un langage de type "markup" ou sur ladite "frame" ;
- des noeuds Webbike de type structure, permettant de définir au moins une condition d'exécution desdits noeuds Webbike de type synchronisation ;
- des noeuds Webbike de type commande, permettant de mettre en oeuvre au moins une opération prédéterminée après s'être positionné sur ledit noeud d'un langage de type "markup" ou sur ladite "frame".

6. Module de création d'objets selon la revendication 5, **caractérisé en ce qu'**il existe en outre au moins un des types de noeuds Webbike suivants:
- des noeuds Webbike du type permettant la définition d'une sous-fonction d'extraction ;
- des noeuds Webbike du type permettant l'indication du ou des objet(s) utilisé(s) dans une sous-fonction d'extraction ;
- des noeuds Webbike du type permettant la définition d'une page Webbike ;
- des noeuds Webbike du type pouvant être réutilisés avec éventuellement une liste de paramètres ;
- des noeuds Webbike du type permettant la déclaration des paramètres d'une page ou d'un noeud réutilisable ;
- des noeuds Webbike du type permettant d'appeler une autre page Webbike sans se synchroniser sur un noeud d'un langage de type "markup" ;
- des noeuds Webbike du type permettant d'appeler un noeud de type réutilisable ;
- des noeuds Webbike du type permettant de faire le lien vers une autre page Webbike ;
- des noeuds Webbike du type permettant la définition d'une URL dynamique pour une page HTML ;
- des noeuds Webbike du type permettant d'affecter une valeur à un paramètre ;
- des noeuds Webbike du type permettant de répéter une séquence d'au moins un noeud Webbike ;
- des noeuds Webbike du type permettant d'inclure au moins une commande dans un emplacement normalement non autorisé d'une séquence d'au moins un noeud Webbike ;
- des noeuds Webbike du type permettant de définir au moins deux façons de se synchroniser selon le contenu d'un document ;
- des noeuds Webbike du type permettant d'interpréter de façon conditionnelle une séquence d'au moins un noeud Webbike.

7. Module de création d'objets selon l'une quelconque des revendications 5 et 6, **caractérisé en ce que** lesdits noeuds Webbike de type commande appartiennent au groupe comprenant :
- des noeuds Webbike du type permettant de définir un bloc d'au moins une commande associé à un noeud du type permettant la définition d'une sous-fonction d'extraction ;
- des noeuds Webbike du type permettant l'extraction du contenu textuel d'un noeud d'un langage de type "markup" ;
- des noeuds Webbike du type permettant l'extraction d'au moins un attribut du noeud d'un langage de type "markup" courant ;
- des noeuds Webbike du type permettant de désigner une valeur constante ;
- des noeuds Webbike du type permettant d'assurer des fonctions de transformation des informations extraites d'un fichier d'un langage de type "markup".

8. Module de création d'objets selon la revendication 7, **caractérisé en ce que** ladite au moins une commande, d'un bloc défini par un noeud Webbike, appartient au groupe comprenant :
- les commandes de création d'objets ;
- les commandes de modification d'au moins un membre d'un objet.

9. Module de création d'objets selon l'une quelconque des revendications 1 à 8, **caractérisé en ce qu'**il existe au moins les deux types de page Webbike suivants:
- des pages Webbike statiques, analysées au lancement de ladite sous-fonction d'extraction ;
- des pages Webbike dynamiques, accessibles à partir d'une autre page Webbike par un noeud Webbike d'un type particulier, dit lien Webbike.

10. Module de création d'objets selon l'une quelconque des revendications 5 à 9, **caractérisé en ce qu'**il existe au moins un noeud Webbike de type synchronisation spécifique permettant de rechercher un noeud d'un langage de type "markup" prédéterminé, afin de se positionner sur ledit noeud d'un langage de type "markup" prédéterminé, et, en outre, un noeud Webbike de type synchronisation générique permettant de rechercher un noeud d'un langage de type "markup" non - prédéterminé mais spécifié en paramètre, afin de se positionner sur ledit noeud d'un langage de type "markup" non - prédéterminé.

11. Module de création d'objets selon l'une quelconque des revendications 5 à 10, **caractérisé en ce qu'**au moins certains des noeuds Webbike de type synchronisation tiennent compte de conditions d'extraction portant sur des attributs et/ou sur un contenu textuel et/ou sur au moins un noeud fils d'un noeud d'un langage de type "markup trouvé.

12. Module de création d'objets selon l'une quelconque des revendications 1 à 11, **caractérisé en ce que** ledit module Webbike met en oeuvre une fonction de gestion des cookies.

13. Module de création d'objets selon l'une quelconque des revendications 1 à 12, **caractérisé en ce que** ledit langage spécifique est construit à l'aide d'un langage du type XML.

14. Module de création d'objets selon l'une quelconque des revendications 1 à 13, **caractérisé en ce que** ledit langage de type "markup" appartient au groupe comprenant :
- les langages de type XML (en anglais "Extended Markup Language") ;
- les langages de type HTML (en anglais "HyperText Markup Language") ;
- les langages de type SGML (en anglais "Standard Generalized Markup Language") et dérivés ;
- les langages de type WML (en anglais "Wireless Markup Language").

15. Module de création d'objets selon l'une quelconque des revendications 1 à 14, **caractérisé en ce qu'**il est mis en oeuvre au sein d'un système de publication multi - terminal (23), du type offrant un accès à au moins une application correspondant à un service, permettant de fournir à une pluralité de terminaux (22), selon au moins deux types de terminal distincts, des informations contenues dans au moins une source d'informations,
ledit système comprenant :
- au moins ledit module de création d'objets ;
- un module de génération de réponse sous un format de présentation générique, en réponse à une requête formulée par un terminal et relative à une application donnée, ladite application étant définie, au sein dudit module de génération de réponse, par une pluralité de contextes et une politique de navigation parmi lesdits contextes, chaque contexte comprenant au moins une action et/ou au moins un objet, créé par ledit au moins un module de création d'objets, ladite réponse résultant d'une navigation selon ladite politique de navigation au sein de ladite pluralité de contextes ;
- un module de présentation, permettant de transformer ladite réponse sous un format de présentation générique en une réponse sous un format de présentation spécifique au type dudit terminal ayant formulé ladite requête.

16. Module de création d'objets selon la revendication 15, **caractérisé en ce que** ledit système de publication multi - terminal comprend en outre un module d'interfaçage permettant d'intercepter et d'analyser ladite requête formulée par un terminal, de manière à :
- identifier le type dudit terminal ;
- créer une nouvelle requête, sous un format de requête générique, destinée audit module de génération de réponse.

## Patentansprüche

1. Webbike-Modul genanntes Modul zum Erzeugen von Objekten, welches das Bereitstellen mindestens einer Funktion zum Erzeugen von Objekten ermöglicht, ausgehend von mindestens aus einer Datenquelle (25) extrahierten Rohdaten, die mindestens ein in einer Sprache des Typs "Markup" ausgedrücktes Dokument enthalten,
**dadurch gekennzeichnet, dass**, wenn das Modul zum Erzeugen von Objekten eine Anforderung (201) für mindestens ein Objekt empfängt, die mindestens eine Funktion zum Erzeugen von Objekten mindestens eine Extraktions-Unterfunktion verwendet, mit welcher der Inhalt von mindestens einem Glied (31, 32, 33) bezüglich der Struktur des mindestens einen Objekts (3) als Information erhältlich ist,
wobei jede Extraktions-Unterfunktion nach einer spezifischen Sprache aus mindestens einer Webbike-Seite gebildet wird, die mindestens einen Webbike-Knoten umfasst, und
dadurch, dass diese mindestens eine Webbike-Seite mit mindestens einem Dokument (1, 2) synchronisiert ist, das nach einer Sprache vom Typ "Markup" von mindestens einer Datenquelle ausgedrückt wird, wobei dieses mindestens eine Dokument selbst mindestens einen Knoten einer Sprache vom Typ "Markup" umfasst, wobei die Synchronisierung es einem Webbike-Knoten ermöglicht, sich auf einen Knoten (21) einer Sprache vom Typ "Markup" zu positionieren, um daraus Rohdaten zum Erzeugen des Objektes zu extrahieren.

2. Modul zum Erzeugen von Objekten nach Anspruch 1, **dadurch gekennzeichnet, dass** die mindestens eine Funktion zum Erzeugen von Objekten ferner eine Unterfunktion zum Vergleichen des mindestens einen Objekts, auf das sich die Anforderungen bezieht, mit einer Liste von vorher zumindest teilweise erzeugten Objekten umfasst, so dass die mindestens eine Extraktionsunterfunktion nur zum Erzeugen von vorher noch nicht erzeugten Objekten und/oder zum Vervollständigen von vorher teilweise erzeugten Objekten eingesetzt wird.

3. Modul zum Erzeugen von Objekten nach einem der Ansprüche 1 oder 2, **dadurch gekennzeichnet, dass** jedes Objekt mindestens ein Glied, dass sich auf die Struktur dieses Objektes bezieht, und mindestens einen Verfasser umfasst, wobei dieser mindestens eine Verfasser es dem Modul zum Erzeugen von Objekten ermöglicht, den Informationsinhalt des mindestens einen Gliedes zu erfassen.

4. Modul zum Erzeugen von Objekten nach Anspruch 3, **dadurch gekennzeichnet, dass** bei Empfang einer Anforderung bezüglich mindestens einem ersten Objekt, die Extraktionsunterfunktion es ferner ermöglicht, den Informationsinhalt von mindestens einem Glied von mindestens einem zweiten Objekt zu erfassen, wobei dieses zweite Objekt verschieden von dem mindestens einem ersten Objekt ist, wenn die Rohdaten, mit denen der Informationsinhalt des Inhalts erfasst werden kann, innerhalb des erwähnten Dokumentes vorhanden sind, mit dem die mindestens erste Webbike-Seite synchronisiert wird.

5. Modul zum Erzeugen von Objekten nach einem der Ansprüche 1 bis 4, **dadurch gekennzeichnet, dass** es mindestens die drei folgenden Typen von Webbike-Knoten gibt:
- Webbike-Knoten vom Synchronisierungstyp, mit denen ein Knoten einer Sprache vom Typ "Markup" oder ein "Frame" eines Knotens einer Sprache vom Typ "Markup" in dem mindestens einem nach einer Sprache vom Typ "Markup" ausgedrückten Dokument gesucht werden kann, um sich auf dem Knoten einer Sprache vom Typ "Markup" oder auf dem "Frame" zu positionieren;
- Webbike-Knoten vom Strukturtyp, mit denen mindestens eine Ausführungsbedingung dieser Webbike-Knoten vom Synchronisierungstyp definiert werden kann;
- Webbike-Knoten vom Befehlstyp, mit denen mindestens eine vorgegebene Operation durchgeführt werden kann nach dem Positionieren auf dem Knoten einer Sprache des Typs "Markup" oder auf dem "Frame".

6. Modul zum Erzeugen von Objekten nach Anspruch 5, **dadurch gekennzeichnet, dass** es ferner mindestens eines der Webbike-Knoten folgenden Typs gibt:
- Webbike-Knoten vom Typ, die das Definieren einer Extraktionsunterfunktion ermöglichen;
- Webbike-Knoten vom Typ, die das Angeben des Objektes oder der Objekte ermöglichen, das (die) in einer Extraktionssubfunktion verwendet wird (werden);
- Webbike-Knoten vom Typ, die das Definieren einer Webbike-Seite ermöglichen;
- Webbike-Knoten vom Typ, die möglicherweise mit einer Parameterliste wieder verwendet werden können;
- Webbike-Knoten vom Typ, die das Deklarieren von Parametern einer Seite oder eines wiederverwendbaren Knotens ermöglichen;
- Webbike-Knoten vom Typ, die das Aufrufen einer anderen Webbike-Seite ermöglichen, ohne sich auf einen Knoten einer Sprache des Typs "Markup" zu synchronisieren;
- Webbike-Knoten vom Typ, die das Aufrufen eines Knoten des wieder verwendbaren Typs ermöglichen;
- Webbike-Knoten vom Typ, die das Aufstellen der Verbindung zu einer anderen Webbike-Seite ermöglichen;
- Webbike-Knoten vom Typ, die das Definieren einer dynamischen URL für eine HTML-Seite ermöglichen;
- Webbike-Knoten vom Typ, die das Zuordnen eines Wertes zu dem Parameter ermöglichen;
- Webbike-Knoten vom Typ, die das Wiederholen einer Folge von mindestens einem Webbike-Knoten ermöglichen;
- Webbike-Knoten vom Typ, die das Einbringen von mindestens einem Befehl an einer normalerweise verbotenen Stelle einer Folge von mindestens einem Webbike-Knoten ermöglichen;
- Webbike-Knoten vom Typ, die das Definieren von mindestens zwei Arten, sich gemäß dem Inhalt eines Dokumentes zu synchronisieren, ermöglichen;
- Webbike-Knoten vom Typ, die das bedingte Deuten einer Folge von mindestens einem Webbike-Knoten ermöglichen.

7. Modul zum Erzeugen von Objekten nach einem der Ansprüche 5 oder 6, **dadurch gekennzeichnet, dass** die Webbike-Knoten vom Befehlstyp der folgendes umfassenden Gruppe angehören:
- Webbike-Knoten vom Typ, die das Definieren eines Blocks von mindestens einem Befehl ermöglichen, der mit einem Knoten von Typ assoziiert ist, der das Definieren einer Extraktionsunterfunktion ermöglicht;
- Webbike-Knoten vom Typ, die das Extrahieren des Textinhaltes eines Knotens einer Sprache vom Typ "Markup" ermöglichen;
- Webbike-Knoten vom Typ, die das Extrahieren von mindestens einer Eigenschaft des Knotens einer Sprache vom Typ "Markup" ermöglichen;
- Webbike-Knoten vom Typ, die das Bezeichnen eines konstanten Wertes ermöglichen;
- Webbike-Knoten vom Typ, die das Sicherstellen von Transformationsfunktionen der aus einer Datei einer Sprache des Typs "Markup" extrahierten Information ermöglichen.

8. Modul zum Erzeugen von Objekten nach Anspruch 7, **dadurch gekennzeichnet, dass** der von einem Webbike-Knoten definierte Block mindestens einen Befehl aus der folgendes umfassenden Gruppe gehört:
- die Befehle zum Erzeugen von Objekten;
- die Befehle zum Ändern von mindestens einem Glied eines Objektes.

9. Modul zum Erzeugen von Objekten nach einem der Ansprüche 1 bis 8, **dadurch gekennzeichnet, dass** es mindestens die zwei folgenden Typen von Webbike-Seiten gibt:
- statische Webbike-Seiten, die beim Starten der Extraktionsunterfunktion analysiert werden;
- dynamische Webbike-Seiten, die von einer anderen Webbike-Seite her zugänglich sind, über einen Webbike-Verbindung genannten Webbike-Knoten besonderer Art.

10. Modul zum Erzeugen von Objekten nach einem der Ansprüche 5 bis 9, **dadurch gekennzeichnet, dass** es mindestens einen Webbike-Knoten vom Typ spezifischer Synchronisierung gibt, der das Suchen eines Knotens einer vorbestimmten Sprache des Typs "Markup" ermöglicht, um sich auf dem besagten Knoten einer vorbestimmten Sprache des Typs "Markup" zu positionieren und ferner einen Webbike-Knoten vom Typ generischer Synchronisierung, der das Suchen eines Knotens einer nicht vorbestimmten aber Parameter spezifizierten Sprache des Typs "Markup" ermöglicht, um sich auf dem besagten Knoten einer nicht vorbestimmten Sprache des Typs "Markup" zu positionieren.

11. Modul zum Erzeugen von Objekten nach einem der Ansprüche 5 bis 10, **dadurch gekennzeichnet, dass** mindestens einige der Webbike-Knoten des Synchronisierungstyps die Eigenschaften und/oder einen Textinhalt und/oder mindestens einen Tochterknoten eines Knotens einer gefundenen Sprache vom Typ "Markup" betreffenden Extraktionsbedingungen berücksichtigen.

12. Modul zum Erzeugen von Objekten nach einem der Ansprüche 1 bis 11, **dadurch gekennzeichnet, dass** das Webbike-Modul eine Funktion zum Verwalten der "cookies" einsetzt.

13. Modul zum Erzeugen von Objekten nach einem der Ansprüche 1 bis 12, **dadurch gekennzeichnet, dass** die besagte spezifische Sprache mit Hilfe einer Sprache des Typs XML aufgebaut wird.

14. Modul zum Erzeugen von Objekten nach einem der Ansprüche 1 bis 13, **dadurch gekennzeichnet, dass** die Sprache vom Typ "Markup" zu der folgendes umfassenden Gruppe gehört:
- die Sprachen vom Typ XML (in Englisch: "Extended Markup Language");
- die Sprachen vom Typ HTML (in Englisch: "Hyper Text Markup Language");
- die Sprachen vom Typ SGML (in Englisch: "Standard Generalized Markup Language") und abgeleitete;
- die Sprachen vom Typ WML (in Englisch: "Wireless Markup Language").

15. Modul zum Erzeugen von Objekten nach einem der Ansprüche 1 bis 14, **dadurch gekennzeichnet, dass** es innerhalb eines Multi-Terminal Publikationssystem (23) eingesetzt wird, von der Art, die mindestens einer einem Dienstleister entsprechenden Anwendung Zugang bietet, die es ermöglicht, einer Vielzahl von Terminals (22) unter Anwendung von mindestens zwei verschiedenen Terminals, Informationen zukommen zu lassen, die mindestens in einer Informationsquelle enthalten sind,
wobei das System folgendes umfasst:
- mindestens das Modul zum Erzeugen von Objekten;
- ein Modul zum Erzeugen einer Antwort in einem auswählbaren Präsentationsformat, als Antwort auf eine von einem Terminal gestellte Anforderung und die eine gegebene Anwendung betrifft, wobei diese Anwendung innerhalb des Antwort erzeugenden Moduls durch eine Vielzahl von Kontexten und durch eine Politik der Navigation zwischen diesen Kontexten definiert ist, wobei jeder Kontext mindestens eine Aktion und/oder mindestens ein Objekt umfasst, das von dem mindestens einem Modul zum Erzeugen von Objekten erzeugt wurde, wobei die Antwort das Ergebnis einer Navigation gemäß der besagten Navigationspolitik innerhalb der besagten Vielzahl von Kontexten ist;
- ein Präsentationsmodul, welches das Umwandeln der Antwort unter einem auswählbaren Präsentationsformat in eine Antwort unter einem für den Typ des Terminals spezifischen Präsentationsformat ermöglicht, das den Antrag gestellt hat.

16. Modul zum Erzeugen von Objekten nach Anspruch 15, **dadurch gekennzeichnet, dass** das Multi-Terminal Publikationssystem ferner ein als Schnittstelle wirkendes Modul umfasst, welches das Erfassen und Analysieren des von einem Terminal gestellten Antrags ermöglicht, um:
- den Typ des Terminals zu identifizieren;
- einen neuen Antrag unter einem auswählbaren Format zu erzeugen, der an das Modul zum Erzeugung der Antwort gestellt werden soll.

## Claims

1. Object creation module, called Webbike module, making it possible to provide at least one object creation function from raw data which is extracted from at least one data source (25) containing at least one document which is expressed in a language of "markup" type,
**characterized in that** when the said object creation module receives a request (201) for at least one object, the said at least one object creation function implements at least one extraction subfunction, making it possible to add information to the content of at least one member (31, 32, 33) in relation to the structure of the said at least one object (3),
each extraction subfunction consisting, according to a specific language, of at least one Webbike page including at least one Webbike node,
and **in that** the said at least one Webbike page is synchronised with at least one document (1, 2) which is expressed according to a language of "markup" type of at least one data source, the said at least one document itself including at least one node of a language of "markup" type, the said synchronisation enabling a Webbike node to position itself on a node (21) of a language of "markup" type to extract raw data from it with a view to the said creation of objects.

2. Object creation module according to Claim 1, **characterized in that** the said at least one object creation function also includes a subfunction to compare the said at least one object, which the said request concerns, with a list of objects which have been at least partially created in advance, so that the said at least one extraction subfunction is implemented only to create objects which have not been created in advance and/or to complete objects which have been partially created in advance.

3. Object creation module according to either of Claims 1 and 2, **characterized in that** each object includes at least one member in relation to the structure of the said object and at least one constructor, the said at least one constructor enabling the said module to create objects to add information to the content of the said at least one member.

4. Object creation module according to Claim 3, **characterized in that** on receiving a request in relation to at least one first object, the said extraction subfunction additionally makes it possible to add information to the content of at least one member of at least one second object, which is distinct from the said at least one first object, when the raw data which makes it possible to add information to the said content is present within the said document, with which the said at least one Webbike page is synchronised.

5. Object creation module according to any one of Claims 1 to 4, **characterized in that** at least the three following types of Webbike node exist:
- Webbike nodes of synchronisation type, making it possible to search for a node of a language of "markup" type or a "frame" of a node of a language of "markup" type in the said at least one document which is expressed according to a language of "markup" type, to position itself on the said node of a language of "markup" type or on the said "frame";
- Webbike nodes of structure type, making it possible to define at least one condition for executing the said Webbike nodes of synchronisation type;
- Webbike nodes of command type, making it possible to implement at least one predetermined operation after having positioned itself on the said node of a language of "markup" type or on the said "frame".

6. Object creation module according to Claim 5, **characterized in that** additionally at least one of the following types of Webbike node exists:
- Webbike nodes of the type which makes it possible to define an extraction subfunction;
- Webbike nodes of the type which makes it possible to indicate the object(s) which is/are used in an extraction subfunction;
- Webbike nodes of the type which makes it possible to define a Webbike page;
- Webbike nodes of the type which can be reused, with a list of parameters if required;
- Webbike nodes of the type which makes it possible to declare the parameters of a page or of a reusable node;
- Webbike nodes of the type which makes it possible to call another Webbike page without synchronising itself on a node of a language of "markup" type;
- Webbike nodes of the type which makes it possible to call a node of reusable type;
- Webbike nodes of the type which makes it possible to make the link to another Webbike page;
- Webbike nodes of the type which makes it possible to define a dynamic URL for an HTML page;
- Webbike nodes of the type which makes it possible to assign a value to a parameter;
- Webbike nodes of the type which makes it possible to repeat a sequence of at least one Webbike node;
- Webbike nodes of the type which makes it possible to include at least one command in a normally non-authorised position of a sequence of at least one Webbike node;
- Webbike nodes of the type which makes it possible to define at least two ways of synchronising itself according to the content of a document;
- Webbike nodes of the type which makes it possible to interpret a sequence of at least one Webbike node conditionally.

7. Object creation module according to any one of Claims 5 and 6, **characterized in that** the said Webbike nodes of command type belong to the group including:
- Webbike nodes of the type which makes it possible to define a block of at least one command associated with a node of the type which makes it possible to define an extraction subfunction;
- Webbike nodes of the type which makes it possible to extract the textual content of a node of a language of "markup" type;
- Webbike nodes of the type which makes it possible to extract at least one attribute of the current node of a language of "markup" type;
- Webbike nodes of the type which makes it possible to designate a constant value;
- Webbike nodes of the type which makes it possible to provide functions to transform the information which is extracted from a file of a language of "markup" type.

8. Object creation module according to Claim 7, **characterized in that** the said at least one command, of a block which is defined by a Webbike node, belongs to the group including:
- object creation commands;
- commands to modify at least one member of an object.

9. Object creation module according to any one of Claims 1 to 8, **characterized in that** at least the two following types of Webbike page exist;
- static Webbike pages, analysed at the activation of the said extraction subfunction;
- dynamic Webbike pages, accessible from another Webbike page by a Webbike node of a particular type, called a Webbike link.

10. Object creation module according to any one of Claims 5 to 9, **characterized in that** there exist at least one Webbike node of specific synchronisation type, making it possible to search for a predetermined node of a language of "markup" type, to position itself on the said predetermined node of a language of "markup" type, and additionally a Webbike node of generic synchronisation type, making it possible to search for a node of a language of "markup" type, not predetermined but specified by a parameter, to position itself on the said non-predetermined node of a language of "markup" type.

11. Object creation module according to any one of Claims 5 to 10, **characterized in that** at least some of the Webbike nodes of synchronisation type take account of the extraction conditions concerning attributes and/or a textual content and/or at least one daughter node of a found node of a language of "markup" type.

12. Object creation module according to any one of Claims 1 to 11, **characterized in that** the said Webbike module implements a cookie management function.

13. Object creation module according to any one of Claims 1 to 12, **characterized in that** the said specific language is constructed using a language of XML type.

14. Object creation module according to any one of Claims 1 to 13, **characterized in that** the said language of "markup" type belongs to the group including:
- languages of XML ("Extended Markup Language") type;
- languages of HTML ("HyperText Markup Language") type;
- languages of SGML ("Standard Generalized Markup Language") type and derivatives;
- languages of WML ("Wireless Markup Language") type.

15. Object creation module according to any one of Claims 1 to 14, **characterized in that** it is implemented within a multi-terminal publication system (23), of the type which offers access to at least one application corresponding to a service, making it possible to supply to multiple terminals (22), according to at least two distinct types of terminal, information which is contained in at least one information source, the said system including:
- at least the said object creation module;
- a response generation module in a generic presentation format, in response to a request which is formulated by a terminal and in relation to a given application, the said application being defined, within the said response generation module, by multiple contexts and a policy for navigation among the said contexts, each context including at least one action and/or at least one object, created by the said at least one object creation module, the said response resulting from navigation according to the said navigation policy within the said multiple contexts;
- a presentation module, making it possible to transform the said response in a generic presentation format into a response in a presentation format which is specific to the type of the said terminal, having formulated the said request.

16. Object creation module according to Claim 15, **characterized in that** the said multi-terminal publication system also includes an interface module which makes it possible to intercept and analyse the said request which is formulated by a terminal, in such a way as to:
- identify the type of the said terminal;
- create a new request, in the format of a generic request, its destination being the said response generation module.
